# EUROPÄISCHE PATENTSCHRIFT

(11) **EP 0 744 592 B1**
(45) Veröffentlichungstag und Bekanntmachung des Hinweises auf die Patenterteilung: **03.05.2000**
(21) Anmeldenummer: 96108039.7
(22) Anmeldetag: 21.05.1996
(51) Int. Cl.: G01B 5/30, G01B 3/56, G01B 5/24

(54) **Verfahren und Vorrichtung zur Messung von Biegewinkeln von Blechteilen**
Method and device for measuring bending angles of metal sheets
Méthode et dispositif de mesure d'angles de flexion de tôles

(30) Priorität: 24.05.1995 DE 19519108
(43) Veröffentlichungstag der Anmeldung: 27.11.1996
(73) Patentinhaber: Knupfer Metallverarbeitung GmbH, 72531 Hohenstein-Eglingen (DE)
(72) Erfinder: Knupfer, Manfred, 72531 Hohenstein-Eglingen (DE)
(74) Vertreter: Möbus, Daniela, Dr.-Ing.

(56) Entgegenhaltungen:
- DE-A- 2 732 979
- DE-A- 2 803 375
- DE-A- 3 441 113
- US-A- 3 389 473
- US-A- 4 594 870
- US-A- 4 966 029
- PATENT ABSTRACTS OF JAPAN vol. 009, no. 146 (M-389), 21.Juni 1985 & JP 60 024223 A (AMADA:KK), 6.Februar 1985,
- PATENT ABSTRACTS OF JAPAN vol. 012, no. 267 (M-722), 26.Juli 1988 & JP 63 049327 A (AMADA CO LTD), 2.März 1988,

## Beschreibung

Die Erfindung betrifft ein Verfahren und eine Vorrichtung zur Messung von Winkeln, insbesondere von Biegewinkeln von Blechteilen.

Das Herstellen exakter Biegewinkel beim Abkanten von Blechteilen ist bislang ein relativ aufwendiges Verfahren. Der einzustellende Druck des Abkantstempels einer Abkantmaschine zur Erzeugung eines bestimmten Winkels hängt sowohl vom Material des Bleches und der Blechdicke als auch von der relativen Lage der Biegerichtung bezüglich der Walzrichtung des Bleches ab. Insbesondere der letzte Parameter, nämlich der Verlauf der Biegerichtung im Vergleich zur Walzrichtung des Blechs ist in den seltensten Fällen bekannt. Insofern kann auch beim Biegen gleicher Teile aus demselben Material mit gleichbleibender Matererialstärke nicht mit Sicherheit vorausgesagt werden, daß bei einem eingestellten Anpreßdruck des Abkantstempels sich immer der gewünschte Winkel exakt ergibt. Zur Abhilfe dieses Problems wird seitlang zunächst ein erster Biegevorgang durchgeführt, das Blechteil anschließend der Vorrichtung entnommen und der erzeugte Winkel mit Hilfe eines Winkelmessers nachgemessen. Anschließend wird das Blechteil nochmals in die Abkantbank eingelegt und entsprechend der Differenz zwischen dem bereits erzielten Winkel und dem gewünschten Winkel nachgebogen. Dieses Verfahren ist jedoch relativ zeitaufwendig und außerdem in der Handhabung schwierig, da beim Wiedereinlegen des Blechteils in die Abkantbank darauf geachtet werden muß, daß der Stempel wieder exakt an der gleichen Stelle des Blechteils angreift wie beim ersten Biegevorgang. Es ist daher bereits vorgeschlagen worden, das Blechteil nach dem ersten Biegevorgang in der Abkantvorrichtung zu belassen und eine fotografische Aufnahme des Werkstücks von der Stirnseite her zu machen und diese auszuwerten. Bei komplizierten Blechteilen kann diese Methode jedoch durch einen mangelnden Kontrast des gebogenen Stückes des Blechteils gegenüber einem anderen, im Hintergrund des gebogenen Stücks liegenden Teils des Bleches nicht mehr durchführbar sein. Außerdem ist durch eine Fotografie eine beim Abkantvorgang eventuell auftretende Durchbiegung des Bleches, wie sie bei sehr langen Blechteilen fast zwangsläufig auftritt und die zu unterschiedlichen Biegewinkeln an beiden Enden des Blechteils führt, nicht berücksichtigbar.

Aus der DE 27 32 979 A1 ist eine Vorrichtung zur Prüfung des Scheitelwinkels der Konusfläche eines Werkstücks bekannt, bei der zwei Kugelkörper unterschiedlichen Durchmessers in die konische Fläche eingeführt werden. Dabei wird der Abstand der Mittelpunkte der Kugelkörper so festgelegt, daß bei der gegebenen Radiendifferenz der Kugelkörper die beiden Kugelkörper die Konusfläche dann berühren, wenn deren Scheitelwinkel den gewünschten Wert aufweist. Diese Prüfvorrichtung ist relativ aufwendig in der Herstellung und erlaubt keine Messung des tatsächlichen Winkels der Konusfläche.

Der vorliegenden Erfindung liegt daher die Aufgabe zugrunde, eine Möglichkeit zur Messung von Biegewinkeln von Blechteilen zu schaffen, die einfach und genau ist und dabei die obengenannten Nachteile vermeidet.

Die Aufgabe wird mit einem Verfahren gelöst, bei dem an mindestens einer Stelle zwischen die Schenkel des Blechteils - oder eines anderen Gegenstandes - ein Meßkörper eingelegt wird, wobei der Meßkörper auf den beiden Schenkeln aufliegt, und der Abstand des Meßkörpers vom Scheitel des Winkels gemessen und daraus die Größe des Winkels berechnet wird. Diese Messung kann auch während des Biegevorgangs in einer Abkantvorrichtung durchgeführt werden. Dadurch ist das Herausnehmen des Werkstückes aus der Abkantvorrichtung nicht mehr erforderlich. Der Meßkörper gleitet während des Biegevorgangs an den beiden Schenkeln des Blechteiles entsprechend der gegenseitigen Winkelstellung der Schenkel nach oben. Je geringer der Winkel zwischen den Schenkeln wird, desto größer wird der Abstand des Meßkörpers zum Scheitel des Winkels. Aus dem Abstand kann somit eindeutig der zugehörige Winkel der beiden Schenkel des Blechteils bestimmt werden. Die erfindungsgemäße Messung stellt somit ein äußerst einfaches und dennoch zuverlässiges Verfahren zur Messung eines Winkels dar. Dabei kann eine solche Winkelmessung auch an mehreren Stellen des Werkstücks durchgeführt werden. Dies ist insbesondere bei sehr langen Blechteilen zweckmäßig, da hier über die Gesamtlänge des Blechteils die Materialeigenschaften und somit auch die beim Biegevorgang erzeugten Winkel unterschiedlich sein können. Bei Anwendung des erfindungsgemäßen Verfahrens auf gebogene Blechteile kann zweckmäßigerweise nach einem Biegevorgang das Blechteil in der Abkantvorrichtung durch Öffnen der Abkantwerkzeuge in einen entspannten Zustand gebracht, der Biegewinkel gemessen und mit einem Sollwert verglichen und bei Abweichung des Biegewinkels vom Sollwert ein erneuter Biegevorgang durchgeführt werden. Die Winkelkontrolle und das anschließende Nachbiegen können dabei vollautomatisch, ohne menschliche Eingriffe erfolgen.

Die erfindungsgemäße Vorrichtung zur Messung von Biegewinkeln von Blechteilen, ist durch mindestens einen zwischen die Schenkel des Blechteils einführbaren Meßkörper sowie mindestens eine Meßeinrichtung zur Messung des Abstandes des mindestens einen Meßkörpers vom Scheitel des Winkels gekennzeichnet. Zweckmäßigerweise kann dabei der mindestens eine Meßkörper eine Kugel sein. Ein kugelförmiger Meßkörper liegt nur an zwei Punkten an den Schenkeln des Blechteiles an und kann somit während des Biegevorgangs leicht entlang den Blechteilschenkeln gleiten. Die Kugel kann dabei entlang einer Meßskala gleiten, die ein direktes Ablesen des Abstandes der Kugel vom Scheitel des Winkels erlaubt. Auch eine Ausbildung des Meßkörpers als ein mit einer Skala versehener Stab mit kugelkalottenförmiger Spitze ist denkbar. Die Skala des Meßstabes kann dabei von einer optischen Meßeinrichtung, beispielsweise einer Fotozelle, abgetastet werden. Die Meßeinrichtung kann außerdem eine elektronische Signalauswerteeinrichtung aufweisen, die eine Berechnung des Winkels aus dem gemessenen Abstand des Meßkörpers vom Scheitel des Winkels ermöglicht.

Die Erfindung umfaßt außerdem eine Abkantvorrichtung mit mindestens einem angetriebenen Stempel und einer erfindungsgemäßen Vorrichtung zur Winkelmessung, wobei mindestens ein Stempel eine vertikal ausgerichtete Ausnehmung aufweist, in der die Vorrichtung zur Winkelmessung angeordnet ist. Mit einer solchen Abkantvorrichtung ist eine ständige Winkelmessung während des Biegevorgangs möglich. Die Abkantvorrichtung kann dabei eine programmierbare Steuereinheit aufweisen, die mit der Vorrichtung zur Winkelmessung verbunden ist. Auf diese Weise ist eine Kontrolle der Funktionen der Abkantvorrichtung nach dem Meßsignal, das dem erzielten Biegewinkel entspricht, möglich. Die Abkantvorrichtung kann beispielsweise mindestens eine Antriebsvorrichtung aufweisen, die in Abhängigkeit vom Meßsignal der Vorrichtung zur Winkelmessung ansteuerbar ist. Sie kann auch zwei Antriebsvorrichtungen aufweisen, die unabhängig voneinander in Abhängigkeit des Meßsignals der Vorrichtung zur Winkelmessung ansteuerbar sind. Dies ist insbesondere beim Biegen sehr langer Blechteile von Vorteil. Hier können sich an den beiden Enden des Blechteils unterschiedliche Biegewinkel ergeben. Dann ist es zweckmäßig, die beiden Antriebsvorrichtungen der Abkantvorrichtung unabhängig voneinander ansteuern zu können, um diese auf Material Inhomogenitäten des Blechteils beruhenden Winkelunterschiede in einem zweiten Biegevorgang ausgleichen zu können.

Nachfolgend wird ein bevorzugtes Ausführungsbeispiel einer Vorrichtung zur Winkelmessung gemäß der Erfindung anhand der Zeichnung näher erläutert.

Es zeigen:
- Fig. 1: eine Prinzipdarstcllung einer Winkelmessung mit einem kugelförmigen Meßkörper;
- Fig. 2: einen zentralen Längsschnitt durch das Ober- und das Unterwerkzeug einer Abkantvorrichtung mit einer erfindungsgemäßen Meßvorrichtung.

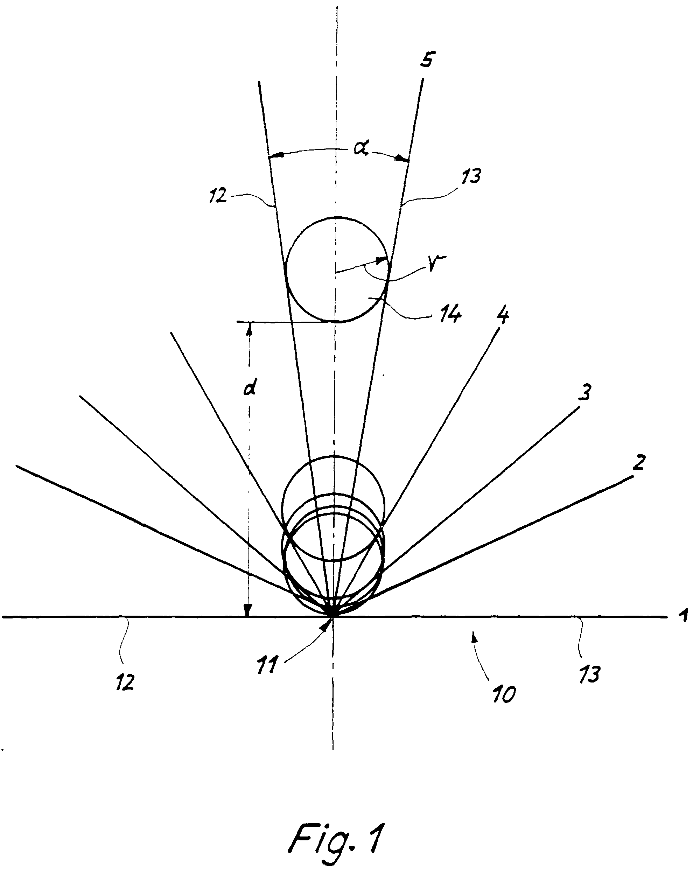

Fig. 1 zeigt schematisch verschiedene Stellungen eines ebenen, flachen Gegenstandes 10 bei einem Biegevorgang um eine Achse 11 senkrecht zur Zeichenebene. Die verschiedenen Stellungen 1, 2, 3, 4 und 5 des Gegenstandes 10 entsprechen einem öffnungswinkel α zwischen den beiden sich beim Biegevorgang ausbildenden Schenkeln 12 und 13 von 180°, 140°, 100°, 60° und 20°. Zwischen die Schenkel 12 und 13 ist ein Meßkörper 14 in Form einer Kugel gelegt. Dieser Meßkörper 14 wird bei zunehmender Verengung des öffnungswinkels α zwischen den beiden Schenkeln 12 und 13 nach oben gedrückt. Dadurch vergrößert sich sein Abstand d von der Biegeachse 11, die den Scheitel des öffnungswinkels α darstellt. Bei bekanntem Radius r des kugelförmigen Meßkörpers 14 kann aus diesem Abstand d zwischen Meßkörper 14 und Scheitel 11 des Winkels α die Größe des Winkels α berechnet werden.

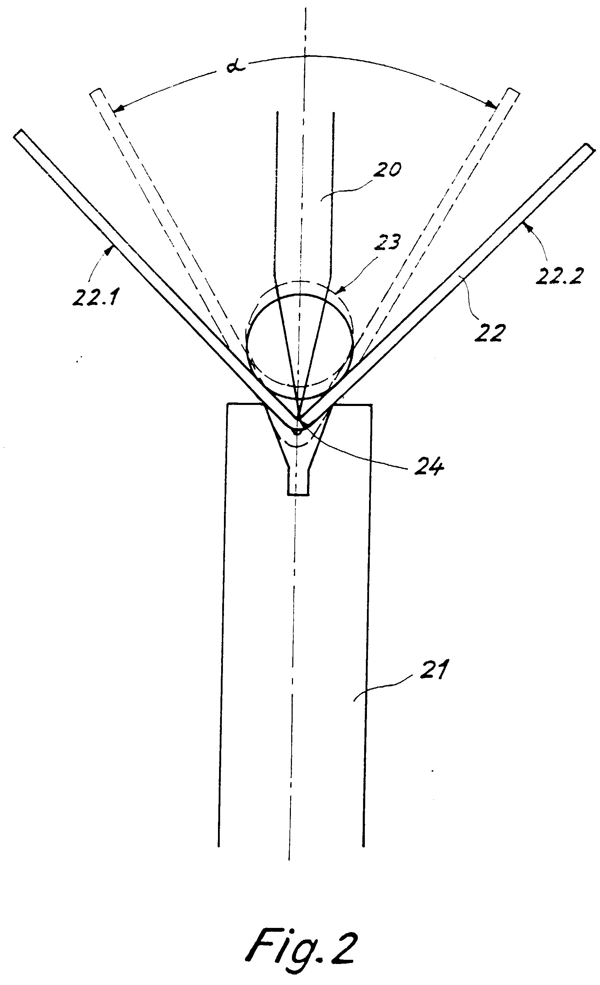

Dieses in Fig. 1 gezeigte Meßprinzip ist in Fig. 2 in Anwendung in einer Abkantvorrichtung gezeigt. Die Schnittdarstellung nach Fig. 2 zeigt ein als Biegestempel ausgebildetes Oberwerkzeug 20 und ein zugehöriges Unterwerkzeug 21 einer Abkantvorrichtung. Zwischen Ober- und Unterwerkzeug 20, 21 ist ein Blechteil 22 eingespannt. Gezeigt sind dabei zwei Stellungen des Blechteils 22 während zweier verschiedener Stufen des Biegevorgangs. Zwischen die beiden Schenkel 22.1 und 22.2 des Blechteils 22 ist wieder ein kugelförmiger Meßkörper 23 eingelegt. In der gestrichelt eingezeichneten Position bei kleinerem öffnungswinkel zwischen den beiden Schenkeln 22.1 und 22.2 befindet sich der Meßkörper 23 in einem größeren Abstand vom Scheitel 24 des Winkels α als im durchgezogen gezeichneten Zustand. Dieser Abstand stellt somit ein eindeutiges Maß für den erzielten Biegewinkel α dar.

## Patentansprüche

1. Verfahren zur Messung von Biegewinkeln von Blechteilen, wobei an mindestens einer Stelle zwischen die Schenkel (22.1, 22.2) des Blechteils (22) ein Meßkörper (23) eingelegt wird, und der Meßkörper (23) auf den beiden Schenkeln (22.1, 22.2) aufliegt, dadurch gekennzeichnet, daß der Abstand des Meßkörpers (23) vom Scheitel (24) des Winkels (α) gemessen und daraus die Größe des Winkels (α) berechnet wird.

2. Verfahren nach Anspruch 1, dadurch gekennzeichnet, daß die Messung während des Biegevorgangs in einer Abkantvorrichtung durchgeführt wird.

3. Verfahren nach Anspruch 2, dadurch gekennzeichnet, daß nach einem Biegevorgang das Blechteil (22) in der Abkantvorrichtung durch Öffnen der Abkantwerkzeuge (20, 21) in einen entspannten Zustand gebracht, der Biegewinkel (α) gemessen und mit einem Sollwert verglichen und bei Abweichung des Biegewinkels (α) vom Sollwert ein erneuter Biegevorgang durchgeführt wird.

4. Vorrichtung zur Messung von Biegewinkeln von Blechteilen, mit mindestens einem zwischen die Schenkel (22.1, 22.2) des Blechteils (22) einführbaren Meßkörper (23), gekennzeichnet durch mindestens eine Meßeinrichtung zur Messung des Abstandes des mindestens einen Meßkörpers (23) vom Scheitel (24) des Winkels (α).

5. Vorrichtung nach Anspruch 4, dadurch gekennzeichnet, daß der mindestens eine Meßkörper (23) eine Kugel ist.

6. Vorrichtung nach Anspruch 4, dadurch gekennzeichnet, daß der mindestens eine Meßkörper (23) ein mit einer Skala versehener Stab mit kugelkalottenförmiger Spitze ist.

7. Vorrichtung nach einem der Ansprüche 4 bis 6, dadurch gekennzeichnet, daß die mindestens eine Meßeinrichtung eine optische Meßeinrichtung ist.

8. Vorrichtung nach einem der Ansprüche 4 bis 7, dadurch gekennzeichnet, daß die mindestens eine Meßeinrichtung eine elektronische Signalauswerteeinrichtung aufweist.

9. Abkantvorrichtung mit mindestens einem angetriebenen Stempel und einer Vorrichtung nach einem der Ansprüche 4 bis 8, dadurch gekennzeichnet, daß der mindestens eine Stempel (20) eine vertikal ausgerichtete Ausnehmung aufweist, in der die Vorrichtung zur Winkelmessung angeordnet ist.

10. Abkantvorrichtung nach Anspruch 9, dadurch gekennzeichnet, daß sie eine programmierbare Steuereinheit aufweist, die mit der Vorrichtung zur Winkelmessung verbunden ist.

11. Abkantvorrichtung nach Anspruch 9 oder 10, dadurch gekennzeichnet, daß sie mindestens eine Antriebsvorrichtung aufweist, die in Abhängigkeit vom Meßsignal der Vorrichtung zur Winkelmessung ansteuerbar ist.

12. Abkantvorrichtung nach Anspruch 9 oder 10, dadurch gekennzeichnet, daß sie zwei Antriebsvorrichtungen aufweist, die unabhängig voneinander in Abhängigkeit des Meßsignals der Vorrichtung zur Winkelmessung ansteuerbar sind.

## Claims

1. A method of measuring bending angles of sheet metal parts, wherein a measuring body (23) is inserted at at least one location between the limbs (22.1, 22.2) of the sheet metal part (22) and the measuring body (23) rests on the two limbs (22.1, 22.2), characterised in that the distance of the measuring body (23) from the vertex (24) of the angle (α) is measured and the magnitude of the angle (α) is calculated therefrom.

2. A method according to claim 1, characterised in that the measurement is made in a bending apparatus during the bending operation.

3. A method according to claim 2, characterised in that after a bending operation the sheet metal part (22) in the bending apparatus is brought into an unstressed state by opening the bending tools (20, 21), the bending angle (α) is measured and is compared with a set value, and if the bending angle (α) differs from the set value a bending operation is performed again.

4. An apparatus for measuring bending angles of sheet metal parts, comprising at least one measuring body (23) which can be introduced between the limbs (22.1, 22.2) of the sheet metal part (22), characterised by at least one measuring device for measuring the distance of the at least one measuring body (23) from the vertex (24) of the angle (α).

5. An apparatus according to claim 4, characterised in that the at least one measuring body (23) is a sphere.

6. An apparatus according to claim 4, characterised in that the at least one measuring body (23) is a rod which has a tip in the form of a spherical cap and which is provided with a scale.

7. An apparatus according to any one of claims 4 to 6, characterised in that the at least one measuring device is an optical measuring device.

8. An apparatus according to any one of claims 4 to 7, characterised in that the at least one measuring device comprises an electronic signal evaluation device.

9. A bending apparatus comprising at least one driven plunger and an apparatus according to any one of claims 4 to 8, characterised in that the at least one plunger (20) comprises a vertically aligned recess in which the apparatus for measuring angles is disposed.

10. A bending apparatus according to claim 9, characterised in that it comprises a programmable controller which is connected to the apparatus for measuring angles.

11. A bending apparatus according to claims 9 or 10, characterised in that it comprises at least one drive apparatus which can be operated depending on the measuring signal from the apparatus for measuring angles.

12. A bending apparatus according to claims 9 or 10, characterised in that it comprises two drive apparatuses which can be operated independently of each other depending on the measuring signal from the apparatus for measuring angles.

## Revendications

1. Procédé pour la mesure d'angles de pliage de pièces en tôle, un corps de mesure (23) étant inséré en au moins un endroit entre les ailes (22.1, 22.2) de la pièce en tôle (22), et le corps de mesure (23) reposant sur les deux ailes (22.1, 22.2), caractérisé en ce que la distance du corps de mesure (23) au sommet (24) de l'angle (α) est mesurée et la dimension de l'angle (α) en est déduite.

2. Procédé selon la revendication 1, caractérisé en ce que la mesure est réalisée pendant l'opération de pliage dans un dispositif de coudage.

3. Procédé selon la revendication 2, caractérisé en ce qu'après une opération de pliage la pièce en tôle (22) est amenée, par ouverture des outils de pliage (20, 21), à un état détendu dans le dispositif de coudage, l'angle de pliage (α) est mesuré et comparé avec une valeur de consigne et, en cas d'écart de l'angle de pliage (α) par rapport à la valeur de consigne, une nouvelle opération de pliage est réalisée.

4. Dispositif pour la mesure d'angles de pliage de pièces en tôle, avec au moins un corps de mesure (23) insérable entre les ailes (22.1, 22.2) de la pièce en tôle (22), caractérisé par au moins un dispositif de mesure de la distance du corps de mesure (23), au nombre d'au moins un, au sommet (24) de l'angle (α).

5. Dispositif selon la revendication 4, caractérisé en ce que le corps de mesure (23), au nombre d'au moins un, est une bille.

6. Dispositif selon la revendication 4, caractérisé en ce que le corps de mesure (23), au nombre d'au moins un, est une barre munie d'une graduation avec une pointe en forme de calotte sphérique.

7. Dispositif selon l'une des revendications 4 à 6, caractérisé en ce que le dispositif de mesure, au nombre d'au moins un, est un dispositif de mesure optique.

8. Dispositif selon l'une des revendications 4 à 7, caractérisé en ce que le dispositif de mesure, au nombre d'au moins un, comporte un dispositif électronique d'analyse de signal.

9. Dispositif de pliage avec au moins un poinçon entraîné et un dispositif selon l'une des revendications 4 à 8, caractérisé en ce que le poinçon (20), au nombre d'au moins un, est pourvu d'un évidement orienté verticalement dans lequel est disposé le dispositif de mesure d'angle.

10. Dispositif de pliage selon la revendication 9, caractérisé en ce qu'il comporte une unité de commande programmable qui est connectée au dispositif de mesure d'angle.

11. Dispositif de pliage selon la revendication 9 ou 10, caractérisé en ce qu'il comporte au moins un dispositif d'entraînement qui peut être entraîné en fonction du signal de mesure du dispositif de mesure d'angle.

12. Dispositif de pliage selon la revendication 9 ou 10, caractérisé en ce qu'il comporte deux dispositifs d'entraînement qui peuvent être entraînés indépendamment l'un de l'autre en fonction du signal de mesure du dispositif de mesure d'angle.
